(19) Europäisches Patentamt
European Patent Office
Office européen des brevets

(11) **EP 2 064 527 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
***G01F 1/66*** *(2006.01)*

(21) Anmeldenummer: **07803249.7**

(86) Internationale Anmeldenummer:
**PCT/EP2007/059287**

(22) Anmeldetag: **05.09.2007**

(87) Internationale Veröffentlichungsnummer:
**WO 2008/028927 (13.03.2008 Gazette 2008/11)**

(54) **SCHALTUNGSANORDNUNG ZUM BIDIREKTIONALEN BETRIEB VON AN DEN ENDEN EINER MESSSTRECKE ANGEORDNETEN SCHALLWANDLERN**

CIRCUIT ARRANGEMENT FOR THE BIDIRECTINAL OPERATION OF A SOUND TRANSDUCER DISPOSED AT THE ENDS OF A MEASURING SECTION

AGENCEMENT DE CIRCUIT POUR L'EXPLOITATION BIDIRECTIONNELLE DE CONVERTISSEURS ACOUSTIQUES DISPOSES AUX EXTREMITES D'UN TRAJET DE MESURE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **05.09.2006 DE 102006041531**

(43) Veröffentlichungstag der Anmeldung:
**03.06.2009 Patentblatt 2009/23**

(73) Patentinhaber: **Continental Automotive GmbH 30165 Hannover (DE)**

(72) Erfinder:
• **BIERL, Rudolf 93055 Regensburg (DE)**
• **FRUEHAUF, Waldemar 90491 Nürnberg (DE)**
• **LESSER, Martin 84032 Landshut (DE)**
• **MEYER, Andreas 93199 Zell (DE)**
• **STEUBER, Frank 70806 Kornwestheim (DE)**

(56) Entgegenhaltungen:
**EP-A- 0 477 419      EP-A- 0 498 141
EP-A- 0 807 824      DE-A1- 2 453 765
DE-A1- 3 025 788      DE-A1- 19 810 798
DE-C1- 4 400 448      US-A- 6 074 346**

**Beschreibung**

Die Erfindung betrifft eine Schaltungsanordnung zum bidirektionalen Betrieb von an den Enden einer Messstrecke angeordneten Schallwandlern mit einem Signalgenerator und einem Empfänger, die über Schaltelemente mit den Schallwandlern verbunden sind.

Eine derartige Schaltungsanordnung ist aus der DE 198 10 798 A1 bekannt. Die bekannte Schaltungsanordnung umfasst einen Signalgenerator, dem eine Sendeendstufe nachgeschaltet ist. Das vom Signalgenerator erzeugte Sendesignal kann mit Hilfe eines Multiplexers wahlweise auf einer der beiden Ultraschallwandler gegeben werden. Über den Multiplexer können die Ultraschallwandler auch mit einem als Empfänger dienenden Vorverstärker verbunden werden, dem eine Auswerteschaltung nachgeschaltet ist. Über die Multiplexer kann wahlweise einer der beiden Ultraschallwandler mit dem Signalgenerator verbunden werden, während der jeweils andere Ultraschallwandler in Verbindung mit dem Vorverstärker und der Auswerteeinheit steht. Dementsprechend können entlang der von dem Ultraschallwandler definierten Messstrecke Ultraschallsignale in beide Richtungen gesendet werden. Die Messstrecke durchquert einen Gasmassenstrom derart, dass sich für die beiden Senderichtungen unterschiedlichen Laufzeiten für das Schallsignal ergeben. Aus den unterschiedlichen Laufzeiten kann dann auf die Geschwindigkeit des Gasstromes geschlossen werden.

Mit Hilfe der bekannten Schaltungsanordnung können Strömungsmesser für flüssige oder gasförmige Medien eingerichtet werden. Dazu zählt die Dosierung von Treibstoffen, die Abfüllung von Getränken und die Verbrauchabrechnungen von Wasser oder Gas.

Die mit der Schaltungsanordnung eingerichteten Vorrichtungen zur Durchflussmessung weisen eine Reihe von Vorteilen auf. Ein Vorteil ist, dass die Vorrichtungen für alle Flüssigkeiten und Gase geeignet sind. Ferner wird das Medium selbst durch die Messung nicht verfälscht. Da die Vorrichtungen ohne sich verschleißende mechanische Teile auskommen, weisen die Vorrichtungen eine hohe Langzeitstabilität auf. Ferner sind hohe zeitliche Auflösungen möglich, da die Laufzeiten der Ultraschallsignale in der Regel kleiner einer Millisekunde sind. Ein weiterer Vorteil ist, dass die Richtung des strömenden Mediums erkannt werden kann und dass die Vorrichtung eine lineare Messcharakteristik aufweist. Schließlich können mit Hilfe der Messvorrichtungen auch Zusatzinformationen über Stoffeigenschaften oder Stoffzusammensetzungen gemessen werden, indem beispielsweise die Schallgeschwindigkeit der Ultraschallsignale im Medium bestimmt wird. Hervorzuheben ist schließlich der geringe Platzbedarf und die vergleichsweise kleine Masse der Messvorrichtung sowie der geringe Leistungsbedarf, der den Einsatz zusammen mit stromsparenden Mikrokontrollern ermöglicht.

Damit bei der bekannten Schaltungsanordnung keine Messfehler auftreten, muss für Reziprozität in den Sende- und Empfangswegen gesorgt werden. Zu diesem Zweck werden jeweils ein Signalgenerator und ein Empfänger verwendet, der den jeweiligen Ultraschallwandlern zugeschaltet wird. Ferner sind in Reihe mit den Ultraschallwandlern gleiche Abschlusswiderstände geschaltet, die dafür sorgen, dass die auch bei paarweiser Selektion der Ultraschallwandler auftretenden Abweichungen in den elektrischen Eigenschaften der Schallwandler nicht zu Nullpunktabweichungen bei Messungen am ruhenden Medium oder zu Kennlinienverzerrungen führen.

Für eine optimale Leistungsanpassung muss die Impedanz der Abschlusswiderstände gleich der Impedanz der Ultraschallwandler bei der Resonanzfrequenz der Ultraschallwandler gewählt werden. Damit geht die Hälfte des vom Signalgenerator abgegebenen Signals an den Abschlusswiderständen verloren. Daher muss der Signalgenerator bei der bekannten Schaltungsanordnung hohe Signalspannungen bereitstellen, damit am empfangenden Ultraschallwandler ein Ultraschallsignal mit ausreichender Signalstärke ankommt. Die vom Signalgenerator abzugebenden hohen Signalspannungen können zu Interferenzen zwischen dem Sendeweg und dem Empfangsweg führen, durch die die Messung der Strömungsgeschwindigkeit verfälscht wird. Außerdem können weitere sich in der Nähe befindende Geräte gestört werden.

DE3025788 offenbart die Präambel des Anspruchs 1.

Ausgehend von diesem Stand der Technik liegt der Erfindung daher die Aufgabe zugrunde, eine verbesserte Schaltungsanordnung zum bidirektionalen Betrieb von an den Enden einer Messstrecke angeordneten Schallwandlern zu schaffen.

Diese Aufgabe wird durch die Schaltungsanordnung mit den Merkmalen des unabhängigen Anspruchs gelöst. In davon abhängigen Ansprüchen sind vorteilhafte Ausgestaltungen und Weiterbildungen angegeben.

Bei der Schaltungsanordnung sind die Abschlussimpedanzen parallel zu den Schallwandlern geschaltet. Ferner ist der Signalgenerator eine Signalstromquelle, die einen Innenwiderstand oberhalb des Betrags der Abschlussimpedanzen aufweist. Bei dieser Schaltungsanordnung liegt das vom Signalgenerator erzeugte Sendesignal mit voller Spannung an den Schallwandlern an. Somit sehen die Schallwandler das volle vom Signalgenerator abgegebene Signal und die Gefahr von Interferenzen ist vermindert. Ein weiterer Vorteil ist, dass die Abschlussimpedanzen nicht je nach Sende- oder Empfangsweg zu- oder abgeschaltet werden müssen, sondern dauernd am Ultraschallwandler anliegen. Schließlich ist auch die Reziprozität gegeben, da aufgrund des hohen Innenwiderstands der Stromquelle die vom Schallwandler gesehene Impedanz im Wesentlichen gleich der Impedanz des Abschlusswiderstands ist, so dass ein Schallwandler, der als Sender verwendet wird, die gleiche Impedanz sieht, wie ein Schallwandler, der als Empfänger eingesetzt wird.

Bei einer bevorzugten Ausführungsform ist die Stromquelle von einem Stromspiegel gebildet, der eine Stromquelle mit hohem Innenwiderstand darstellt.

Bei einer weiteren bevorzugten Ausführungsform ist der Stromspiegel von einer Steuerstromquelle angesteuert, die mit einem Pol auf Massepotential liegt. Eine derartige Steuerstromquelle ist von Logiksignalen auf einfache Weise ansteuerbar.

Um den Ausgangswiderstand der Signalstromquelle zu erhöhen, kann der Stromspiegel in Reihe mit einer Kaskode geschaltet werden. Außerdem bewirkt die Kaskodeschaltung, dass die Transistoren des Stromspiegels unter dem Gesichtspunkt der Schaltgeschwindigkeit ausgewählt werden können und nicht unter dem Gesichtspunkt der Spannungsfestigkeit ausgewählt werden müssen.

Der Empfänger kann über Schaltelemente den Schallwandlern zugeschaltet werden. Die Schaltelemente sind vorzugsweise von Transistoren gebildet, deren Steuereingang mit einer weiteren Steuerstromquelle beaufschlagt ist. Dadurch wird die Phasendrehung des Eingangssignals aufgrund von parasitären Kapazitäten zwischen dem Steuereingang und den Schaltanschlüssen des Transistors minimiert.

Weitere Vorteile und Einzelheiten der Erfindung gehen aus der nachfolgenden Beschreibung hervor, in der Ausführungsbeispiele der Erfindung anhand der beigefügten Zeichnung im Einzelnen erläutert werden. Es zeigen:

Figur 1    eine Messvorrichtung zur Bestimmung der mittleren Strömungsgeschwindigkeit in einem Strömungskanal;

Figur 2    ein Diagramm, das den zeitlichen Ablauf einer Messung veranschaulicht;

Figur 3    ein Blockschaltbild einer Schaltungsanordnung zum Betrieb der Messvorrichtung aus Figur 1; und

Figur 4    eine Schaltung zum Betrieb der Messvorrichtung aus Figur 1.

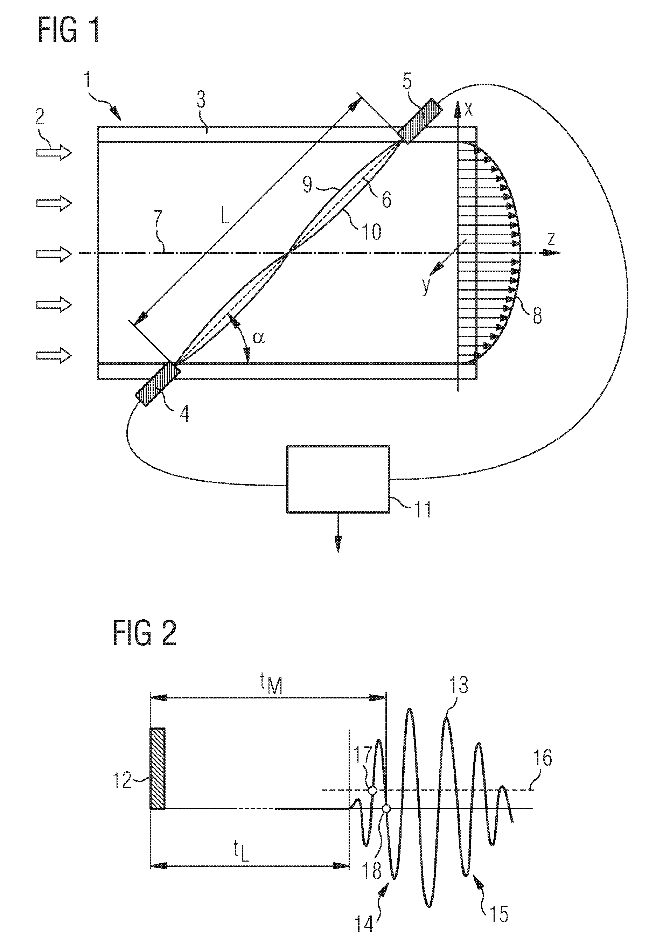

Figur 1 zeigt einen Strömungssensor 1, mit dem sich eine mittlere Geschwindigkeit einer Fluidströmung 2 durch einen Strömungskanal 3 bestimmen lässt. Zu diesem Zweck sind in der Wand des Strömungskanals 3 Ultraschallwandler 4 und 5 angeordnet, die eine Messstrecke 6 der Länge L definieren. Die Messstrecke 6 ist dabei um einen Winkel $\alpha$ gegenüber einer Längsachse 7 des Strömungskanals 3 geneigt.

Die Längsachse 7 des Strömungskanals 3 ist in der Darstellung der Figur 1 gleich der z-Achse eines Koordinatensystems gewählt. Bei laminarer Strömung weist die Fluidströmung 2 ein paraboloidförmiges Strömungsprofil 8 auf. Aufgrund des paraboloiden Strömungsprofils 8 unterscheidet sich ein stromabwärts verlaufender Schallpfad 9 von einem stromaufwärts verlaufenden Schallpfad 10. Im Folgenden sei die Laufzeit eines entlang dem Schallpfad 9 stromabwärts verlaufenden Schallsignals mit $t_{ab}$ und die Laufzeit eines entlang dem Schallpfad 10 stromaufwärts verlaufenden Schallsignals mit $t_{auf}$ bezeichnet. Die über den Querschnitt der Strömungskanals 3 gemittelte Geschwindigkeit ergibt sich dann zu:

$$v_m = L/(2\cos\alpha)(1/t_{ab} - 1/t_{auf}) \tag{1}$$

und die Schallgeschwindigkeit ergibt sich zu

$$c_0^2 = v_m^2 + L^2/(t_{auf}\ t_{ab}) \tag{2}$$

Demnach ist es möglich, durch Messung der beiden Laufzeiten $t_{ab}$ und $t_{auf}$ die entlang der Messstrecke 6 gemittelte Strömungsgeschwindigkeit und die Schallgeschwindigkeit zu bestimmen. Zusammen mit den geometrischen Abmessungen des Querschnitts des Strömungskanals 3 kann dann das Volumen der durchströmenden Fluidmenge bestimmt werden.

Zu diesem Zweck veranlasst eine Sensorschaltung 11 beispielsweise den Ultraschallwandler 4, ein Schallsignal zum Ultraschallwandler 5 auszusenden. Dabei wird von der Sensorschaltung 11 die Laufzeit $t_{ab}$) des Schallsignals ermittelt. Anschließend veranlasst die Sensorschaltung 11 den Ultraschallwandler 5, ein Schallsignal zum Ultraschallwandler 4 zu senden. Dabei wird von der Sensorschaltung 11 die Laufzeit $t_{auf}$ bestimmt.

Das Aussenden von Schallsignalen erfolgt gemäß Figur 2, indem der Ultraschallwandler 4 oder 5 mit einem Sendepuls 12 beaufschlagt wird. Der rechteckigförmige Sendepuls 12 führt zu einem Einschwingen und einem nachfolgenden Ausschwingen des Ultraschallwandlers 4 oder 5. Dementsprechend zeigt auch ein vom gegenüberliegenden Ultraschallwandler 4 oder 5 empfangenes Empfangssignal 13 ein langsames Einschwingen 14 mit nachfolgendem Ausschwingen 15 auf. Der Anstieg des Empfangssignals 13 während des Einschwingens 14 wird mit Hilfe eines Schwellenwerts 16 detektiert. Durch Überschreiten 17 des Schwellenwerts 16 wird eine Schwingung des Empfangssignals 13 detektiert. Ein nachfolgender Nulldurchgang 18 der ausgewählten Schwingung definiert die zeitliche Position $t_M$ des Empfangssignal 13. Die gesuchte absolute Laufzeit $t_L$, die je nach Messvorgang gleich der Laufzeit $t_{ab}$ oder $t_{auf}$ ist, muss aus der Messzeit $t_M$ durch Subtraktion eines ganzzahligen Vielfachen der halben Schwingungsdauer berechnet werden. Im vorliegenden Fall müssen von der Messzeit $t_M$ drei halbe Schwingungsperioden abgezogen werden, um zur Laufzeit $t_L$ zu gelangen.

Die Messgenauigkeit des Strömungssensors 1 wird entscheidend von seiner Nullpunktstabilität bestimmt. Dies bedeutet, dass sich bei ruhendem Medium in beide Messrichtungen nur vernachlässigbare Unterschiede bei der Bestimmung der Laufzeit $t_L$ ergeben dürfen.

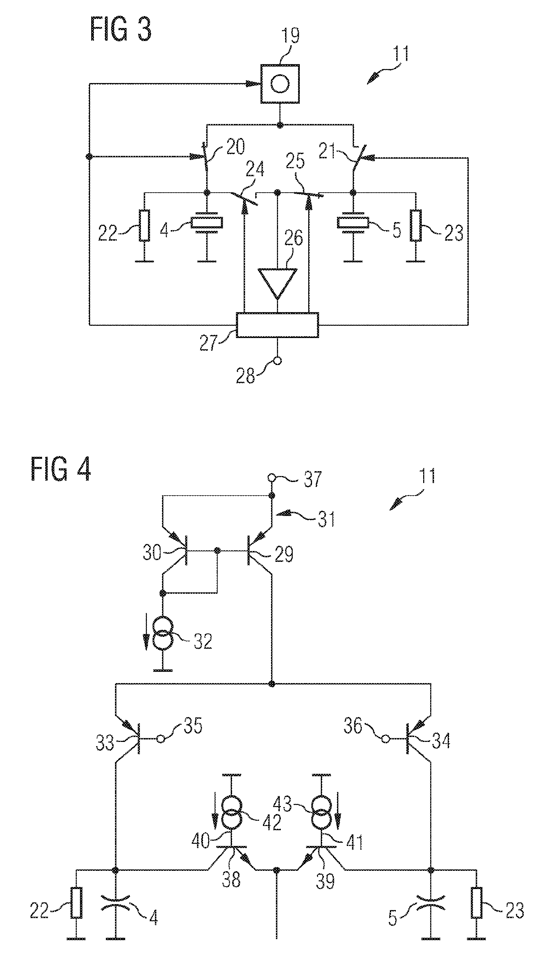

In Figur 3 ist ein Blockschaltbild der Sensorschaltung 11 dargestellt. Die Sensorschaltung 11 umfasst einen Signalgenerator 19, der ein zum Anregen des Ultraschallwandlers 4 oder 5 verwendbares Ausgangssignal erzeugt. Das Ausgangssignal des Signalgenerators 19 wird dem Ultraschallwandler 4 oder 5 über Schaltelemente 20 und 21 zugeführt. Parallel zu den Ultraschallwandlern 4 und 5 sind Abschlussimpedanzen 22 und 23 geschaltet. Die von den Ultraschallwandlern 4 und 5 erzeugten Empfangssignale können über weitere Schaltelemente 24 und 25 einem Empfangsverstärker 26 zugeführt werden, der mit seinem Ausgang eine Auswerteschaltung 27 beaufschlagt, die entsprechend Figur 2 die Laufzeit $t_L$ bestimmt und an einem Ausgang 28 ausgibt.

Die Auswerteschaltung 27 steuert auch das Aussenden des Sendesignals durch den Signalgenerator 19. Ferner steuert die Auswerteschaltung 27 auch die Schaltelemente 20 und 21 sowie 24 und 25.

Die Ultraschallwandler 4 und 5 bilden zusammen mit den Abschlussimpedanzen 22 und 23 sowie mit der jeweils zugeschalteten Ausgangsimpedanz des Signalgenerators 19 oder der Eingangsimpedanz des Empfangsverstärkers 26 zwei Phasenschieber, die über die ausgetauschten Schallsignale linear miteinander gekoppelt sind. Damit die gesamte Phasenverschiebung unabhängig von der Senderichtung gleich bleibt, müssen die Ausgangsimpedanzen des Signalgenerators 19 sowie die Eingangsimpedanz des Empfangsverstärkers 26 möglichst hoch und die Abschlussimpedanzen 22 und 23 möglichst gleich sein. Denn auch bei paarweiser Selektion weisen die Ultraschallwandler 4 und 5 unterschiedliche Eigenschaften auf. Wenn aber die Ultraschallwandler 4 und 5 in ihrer Funktion als Sender oder Empfänger unterschiedliche Impedanzen sehen, ist die Phasendrehung je nach Messrichtung unterschiedlich. Wenn aber die Ultraschallwandler 4 und 5 in ihrer Funktion als Sender oder Empfänger jeweils die gleiche Impedanz sehen, ergibt sich unabhängig von der Senderichtung jeweils die gleiche Phasenverschiebung. Die gleiche Phasenverschiebung in beide Richtungen ist von großer Bedeutung, da sich die Strömungsgeschwindigkeit aus einer Differenz der gemessenen Laufzeiten $t_{ab}$ und $t_{auf}$ ergibt. Aus diesem Grund ist eine absolute Genauigkeit von 1 ppm hinsichtlich der Bestimmung der Laufzeiten von Vorteil. Diese Genauigkeit setzt aber eine möglichst hohe Reziprozität bei der Messung voraus.

In Figur 4 ist ein Teil der Sensorschaltung 11 nochmals im Einzelnen dargestellt. Die in Figur 4 im Einzelnen dargestellte Sensorschaltung 11 umfasst einen von einem Impulstransistor 29 und einem Steuertransistor 30 gebildeten Stromspiegel 31, der von einer Steuerstromquelle 32 angesteuert ist. Der Stromspiegel 31 entspricht zusammen mit der Stromquelle 32 dem Signalgenerator 19 in Figur 3. Da der Innenwiderstand des Stromspiegels 31 verhältnismäßig hoch ist, sehen die Ultraschallwandler 4 und 5 beim Senden lediglich die Abschlussimpedanzen 22 und 23.

Durch Kaskodetransistoren 33 und 34 kann der von dem Ultraschallwandler 4 und 5 gesehene Innenwiderstand nochmals erhöht werden. Gleichzeitig können die Kaskodetransistoren 33 und 34 die Funktion der Schaltelemente 20 und 21 übernehmen. Die an den Steuereingängen 35 und 36 anliegende Kaskodespannung liegt dabei im aktiven Zustand der Kaskodetransistoren 33 und 34 nur wenige Volt unterhalb der an einem Versorgungseingang 37 anliegenden Versorgungsspannung. Da der Emitter der Kaskodetransistoren 33 und 34 nur um die kleine Basis-Emitter-Spannung über der an der Basis der Kaskodetransistoren anliegenden Kaskodespannung liegt, folgt daraus, dass über die Emitter-Kollektor-Strecke des Impulstransistors 29 des Stromspiegels 31 nur wenige Volt abfallen, so dass auch bei einer Versorgungsspannung in der Größenordnung von mehreren 100 V der Impulstransistor 29 nicht unter dem Gesichtspunkt der Spannungsfestigkeit ausgewählt werden muss, sondern unter dem Gesichtspunkt der Schaltgeschwindigkeit ausgewählt werden kann.

Ein Vorteil der in Figur 4 dargestellten Sensorschaltung 11 ist, dass die Steuerstromquelle 32 mit einem Anschluss auf Massepotential liegt, so dass die Steuerstromquelle 32 auf einfache Weise durch entsprechende Logiksignale von der Auswerteschaltung 27 ansteuerbar ist.

Ein weiterer Vorteil ist, dass die an den Ultraschallwandler 4 und 5 anliegende Impulsspannung des Sendepulses 12 fast so hoch wie die an dem Versorgungseingang 37 anliegende Versorgungsspannung sein kann. Somit braucht bei der in Figur 4 dargestellten Schaltung 11 nicht das Doppelte der an den Ultraschallwandler 4 und 5 anliegenden Spannung als Versorgungsspannung zur Verfügung gestellt werden. Vielmehr ist die mögliche Impulsspannung im Wesentlichen nur um die maximale Sättigungsspannung des Impulstransistors 29 im Stromspiegel 31 kleiner als die Versorgungsspannung. Gegebenfalls ist davon noch die Sättigungsspannung der Kaskodetransistoren 34 oder 35 abzuziehen. Es gehen somit in der Regel nur wenige Prozent der Versorgungsspannung verloren.

Zur Steuerung des Empfangswegs verfügt die in Figur 4 dargestellte Sensorschaltung 11 über Schalttransistoren 38 und 39, deren Steuereingänge 40 und 41 von Stromquellen 42 und 43 beaufschlagt sind. Aufgrund ihres hohen Innenwiderstands sorgen die Stromquellen 42 und 43 dafür, dass parasitäre Kapazitäten in den Schalttransistoren 38 und 39, die zusammen mit den Innenwiderständen der Stromquellen 32 und 43 RC-Glieder bilden, keine nennenswerte Phasenverschiebung des Empfangssignals 13 hervorrufen.

Es sei angemerkt, dass zur Maximierung der Messfrequenz Kurzschlussmittel vorgesehen sein können, die jeweils den sendenden Ultraschallwandler 4 und 5 nach dem Senden für eine bestimmte Zeit kurzschließen, um die Ultraschallwandler 4 und 5 schneller zu entladen.

Der hier beschriebene Strömungssensor 1 eignet sich insbesondere als Luftmassensensor, um in der Ansaugleitung die von einem Verbrennungsmotor angesaugte Luftmenge zu bestimmen. Mit dem Strömungssensor 1 können mehr als 1000 Messungen pro Sekunde durchgeführt werden. Insofern ist es möglich, die einzuspritzende Kraftstoffmenge zylinderselektiv zu bestimmen.

Ferner ermöglicht der Strömungssensor 1 die Verwendung hoher Spannungen, sodass die Empfangssignale 13 auch in schallbelasteter Umgebung richtig erkannt werden. Somit kann die Messung auch nicht durch Fremdschall gestört werden. Die Unempfindlichkeit gegen Störungen durch Fremdschall ist insbesondere von Bedeutung, wenn die Luftströmung von einem Turbolader kommt.

Da auch nicht wie beim Stand der Technik das Doppelte der an den Ultraschallwandler 4 und 5 anliegende Spannung in die Sensorschaltung 11 eingespeist werden muss, ist schließlich die Gefahr von Störungen anderer Geräte im Motorraum wesentlich geringer. Hierzu trägt auch bei, dass der eventuell störenden Spannungspuls erst am Wandler entsteht, und da nicht nur mit der halben Amplitude, sondern auch mit einer überwiegend gedämpften Sinusschwingung, deren Frequenzspektrum im Vergleich zu dem Frequenzspektrum eines harten Rechteckpulses wesentlich weniger störend ist. Ein harter Rechteckpuls ist aber die Signalform, den ein herkömmlicher Impulsgenerator, der über in Reihe geschaltete Anpassungswiderstände mit dem Schallwandler verbunden ist, erzeugen muss.

Weiterhin sei darauf hingewiesen, dass Merkmale und Eigenschaften, die im Zusammenhang mit einem bestimmten Ausführungsbeispiel beschrieben worden sind, auch mit einem anderen Ausführungsbeispiel kombiniert werden können, außer wenn dies aus Gründen der Kompatibilität ausgeschlossen ist.

Ferner wird darauf hingewiesen, dass in den Ansprüchen und in der Beschreibung der Singular den Plural einschließt, außer wenn sich aus dem Zusammenhang etwas anderes ergibt. Insbesondere wenn der unbestimmte Artikel verwendet wird, ist sowohl der Singular als auch der Plural gemeint.

**Patentansprüche**

1. Schaltungsanordnung zum bidirektionalen Betrieb von an den Enden einer Messstrecke (6) angeordneten Schallwandlern (4, 5) mit einem Signalgenerator (19) und einem Empfänger (26), die über Schalterelemente (20, 21, 24, 25, 33, 34, 38, 39) mit den Sckiallwandlern (4, 5) verbunden sind, wobei zu den Schallwandlern (4, 5) Abschlussimpedanzen (22, 23) parallel geschaltet sind und der Signalgenerator (19) eine Signalstromquelle (31, 32) ist, deren Innenwiderstand oberhalb des Betrags der Abschlussimpedanzen (22, 23) liegt,
**dadurch gekennzeichnet, dass** der Empfänger (26) über einen Empfangsmultiplexer (38 bis 43) mit den Schallwandlern (4, 5) leitend verbindbar ist und dass der Empfangsmultiplexer Schalttransistoren (38, 39) aufweist, deren Steuereingang (40, 41) von Stromquellen (42, 43) beaufschlagt ist.

2. Schaltungsanordnung nach Anspruch 1,
**dadurch gekennzeichnet, dass** dem Empfänger eine Auswerteschaltung (27) nachgeschaltet ist, mit der das Aussenden eines Sendesignals (12) durch den Signalgenerator(19) und die Schaltvorgänge der Schaltelemente (20, 21, 24, 25, 33, 34, 38, 39) steuerbar sind.

3. Schaltungsanordnung nach Anspruch 1 oder 2,
**dadurch gekennzeichnet, dass** der Signalgenerator (19) einen Stromspiegel (31) umfasst, der an wenigstens einen der beiden Schallwandler (4, 5) anschließbar ist.

4. Schaltungsanordnung nach Anspruch 3,
**dadurch gekennzeichnet, dass** der Stromspiegel (31) von einer auf Massepotential liegenden Stromquelle (31) von einer steuerbaren Stromquelle (32) gesteuert ist.

5. Schaltungsanordnung nach einem der Ansprüche 1 bis 4,
**dadurch gekennzeichnet, dass** der Signalgenerator (19) über eine Kaskbdenschaltung (33, 34) mit einem Schallwandler (4, 5) leitend verbindbar ist.

**6.** Schaltungsanordnung nach einem der Ansprüche 1 bis 5,
**dadurch gekennzeichnet, dass** die Schaltungsanordnung zum Betrieb eines Strömungssensors (1) eingerichtet ist, der der Bestimmung des Gasmassenstroms eines Verbrennungsmotors dient.

## Claims

**1.** Circuit arrangement for the bidirectional operation of sound transducers (4, 5) disposed at the ends of a measuring section (6), having a signal generator (19) and a receiver (26) which are connected to the sound transducers (4, 5) by means of switch elements (20, 21, 24, 25, 33, 34, 38, 39), terminating impedances (22, 23) being connected in parallel with the sound transducers (4, 5), and the signal generator (19) being a signal current source (31, 32) whose internal impedance is above the magnitude of the terminating impedances (22, 23),
**characterized in that**
the receiver (26) can be conductively connected to the sound transducers (4, 5) via a reception multiplexer (38 to 43), and **in that** the reception multiplexer has switching transistors (38, 39) whose control input (40, 41) is supplied by current sources (42, 43).

**2.** Circuit arrangement according to Claim 1,
**characterized in that**
an evaluation circuit (27) is connected downstream of the receiver, which evaluation circuit can be used to control the emission of a transmission signal (12) by the signal generator (19) and the switching operations of the switching elements (20, 21, 24, 25, 33, 34, 38, 39).

**3.** Circuit arrangement according to Claim 1 or 2,
**characterized in that**
the signal generator (19) comprises a current mirror (31) which can be connected to at least one of the two sound transducers (4, 5).

**4.** Circuit arrangement according to Claim 3,
**characterized in that** the current mirror (31) of a current source (31) at ground potential is controlled by a controllable current source (32).

**5.** Circuit arrangement according to one of Claims 1 to 4,
**characterized in that**
the signal generator (19) can be conductively connected to a sound transducer (4, 5) via a cascode circuit (33, 34).

**6.** Circuit arrangement according to one of Claims 1 to 5,
**characterized in that**
the circuit arrangement is set up to operate a flow sensor (1) which is used to determine the gas mass flow of an internal combustion engine.

## Revendications

**1.** Montage pour le fonctionnement bidirectionnel de convertisseurs (4, 5) acoustiques, qui sont montés aux extrémités d'une section (6) de mesure et qui ont un générateur (19) de signal et un récepteur (26) relié aux convertisseurs (4, 5) acoustiques par des éléments (20, 21, 24, 25, 33, 34, 38, 39) d'interrupteur, dans lequel il est monté en parallèle aux convertisseurs (4, 5) acoustiques des impédances (22, 23) terminales et le générateur (19) de signal est une source (31, 32) de courant de signal, dont la résistance interne est supérieure à la valeur absolue des impédances (22, 23) terminales,
**caractérisé en ce que**
le récepteur (26) peut être relié d'une manière conductrice aux convertisseurs (4, 5) acoustiques par un multiplexeur (38 à 43) de réception et **en ce que** le multiplexeur de réception a des transistors (38, 39) de commutation, dont l'entrée (40, 41) de commande est alimentée par des sources (42, 43) de courant.

**2.** Montage suivant la revendication 1,
**caractérisé en ce que**
en aval du récepteur est monté un circuit (27) d'exploitation, par lequel l'envoi d'un signal (12) d'émission par le générateur (19) de signal et les opérations d'interruption des éléments (20, 21, 24, 25, 33, 34, 38, 39) d'interruption peuvent être commandés.

**3.** Montage suivant la revendication 1 ou 2,
**caractérisé en ce que**
le générateur (19) de signal comprend un miroir de courant (31), qui peut être raccordé à au moins l'un des deux convertisseurs (4, 5) acoustiques.

**4.** Montage suivant la revendication 3,
**caractérisé en ce que**
le miroir de courant (31) est commandé par une source (32) de courant au potentiel de la masse.

**5.** Montage suivant l'une des revendications 1 à 4,
**caractérisé en ce que**
le générateur (19) de signal peut être relié d'une manière conductrice à un convertisseur (4, 5) acoustique par un circuit (33, 34) cascade.

**6.** Montage suivant l'une des revendications 1 à 5,
**caractérisé en ce que**
le montage est conçu pour faire fonctionner un capteur (1) de courant, qui sert à la détermination du courant massique de gaz d'un moteur à combustion.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19810798 A1
- DE 3025788